# EUROPEAN PATENT APPLICATION

(11) **EP 2 242 259 A1**
(43) Date of publication of application: **20.10.2010**
(21) Application number: 09158043.1
(22) Date of filing: 16.04.2009
(51) Int. Cl.: H04N 5/445

(54) **Content recommendation**

(71) Applicant: Panasonic Corporation, Kadoma-shi Osaka 571-8501 (JP)
(72) Inventor: Becker, Ralf, 63225 Langen (DE); Rey, Jose Luis, 63225 Langen (DE); Schlockermann, Martin, 63225 Langen (DE); Nakano, Toshihisa, Osaka-shi Osaka 540-6207 (JP); Kawaguchi, Toru, Osaka-shi Osaka 540-6207 (JP)
(74) Representative: Grünecker, Kinkeldey, Stockmair & Schwanhäusser Anwaltssozietät

(57) **Abstract**

The present invention relates to a content recommendation system and method that is optimized for cross-domain recommendation by enabling the issuing of a recommendation for related content at a particular appropriate timing. The system according to the invention enables to take into account current broadcast content, past and future programs available from a service network such as a catch-up service and the user's viewing history. For example, it is judged whether available content should be recommended during or after watching the current broadcast content.

## Description

The present invention generally relates to the presentation of audio-visual content for consumption. In particular, the present invention relates to a system for recommending content to a consumer.

Traditionally, there was a clear separation between content distributed by broadcast and content available over service networks, such as web content (Internet content). Broadcast content such as audio-visual content (known as TV or television content) is traditionally provided in a linear fashion utilizing broadcasting networks, for instance based on satellite, cable or terrestrial distribution systems (analog or digital).

More recently, with a rise in popularity of the Internet, audio-visual content has become increasingly available over the Internet. Internet-based audio-visual content is typically provided in a non-linear fashion (for instance, streaming or download) utilizing communications networks. Preferably, broadband communications networks are utilized (for instance, DSL).

Thus, each content type was provided using different distribution paths, i.e. broadcast by a broadcast infrastructure (broadcast networks), and web content via service networks such as the Internet, or parts thereof, or any other IP-based network etc. In recent times, both traditional broadcast and web-based distribution paths have become are more and more converging. On the one hand, traditional web content services are providing TV content, for example broadcast of content on YouTube. On the other hand, traditional broadcast content providers offer so-called catch-up TV services, for example BBC iPlayer.

These catch-up TV services offer a non-linear access to broadcast TV content in the Internet. Typically, catch-up TV services provide free-of-charge access to archived content during a predetermined period of time, for example, all broadcast content of the last seven days. But also pre-TV (i.e. future) content might be available, which is typically a charged service. Current catch-up TV services offer PC-based access to the broadcast content using a streaming and /or download distribution mechanism.

One of the major content users' access from catch-up TV services are episodes of popular TV series. Episodes can be part of a larger story, stretched out over a time period covering one or more seasons or even an entire series run. This is especially prevalent in dramatic television series, including soap operas or science fiction series. An important characteristic of such content is that a story continues to evolve from episode to episode. This potentially leads to the consumer's wish not to miss an episode and to watch the episodes in sequence as far as possible.

Current catch-up TV services are mainly accessed using a personal computer (PC), which is typically equipped with a network interface (preferably broadband) that allows connecting to the Internet. However, recently also consumer electronic (CE) devices are being equipped with broadband network interfaces. For example, current digital television sets (DTV) may comprise a broadcast interface, such as based on satellite, cable or terrestrial broadcast technologies, and additionally a (broadband) service network interface. The broadcast interface allows the reception of broadcast information and programs, while the broadband interface allows connection to the Internet, or more generally to a service network. Alternatively, a DTV may be solely equipped with a service network interface. In this case, the single interface is used for both receiving broadcast information and programs, for instance based on an IPTV technology, and connecting to the Internet or other network services. An example of an IPTV-based application is the VIERA CAST system recently developed by Panasonic Corporation. VIERA CAST provides access to catch-up TV services via TV devices that are equipped with a network interface connecting to the Internet.

Another recent development in audio-visual consumer electronics are electronic program guides (EPG). Electronic program guides provide information with respect to scheduled broadcast television or radio programs. The information is typically displayed on the TV screen, with various navigation functions. On the one hand, electronic program guides provide information that has been conventionally made available through program journals printed on paper, but also implies additional functions such as scheduling of content or future recording by a digital video recorder (DVR) or a personal video recorder (PVR). EPG on-screen information may be delivered by a dedicated channel or assembled by the receiving equipment from information sent by each program channel, for instance during the vertical blanking period.

Typically, additionally delivered broadcast-related information includes information or metadata about broadcast content. The information may relate to the currently broadcasted content, or may even relate to content that is scheduled to be broadcast in the future. The electronic program guide EPG is generated in receiving devices therefrom.

Traditionally, the EPG is solely based on broadcast signaling information. However, recent developments in the field of EPG also include information about content available from broadband services such as catch-up TV services.

The EPG may also be utilized for generating recommendations of content to a user (consumer). Therefore, the EPG may allow a user to mark broadcast programs of interest for notifying a user when the contents are actually broadcast.

Another type of content recommendation system is available in typical web content services such as YouTube. Based on selected or watched content, potentially related content is recommended.

A common characteristic of both, the typical broadcast content related and the typical web content related, examples is that there is only a recommendation of content from the same source. In other words, broadcast content is recommended based on information about broadcast content, and network service based content is recommended based on information about network service based content. Enabling direct access from the devices that are typically used to consume broadcast content to network services providing broadcast-related content, such as previously described catch-up TV services, are very convenient for the users. This allows transparent access to TV content regardless of whether it is received through broadcast or service networks. Integrated platforms such as the IPTV described above allow utilization of a common user interface for accessing the content, for instance TV display and remote control. Utilization of a well-known user interface provides a particularly convenient access for non-PC savvy-users to broadband services such as catch-up TV.

However, simply just transferring current PC-based operation to a CE device such as DTV is not appropriate. Typically accessing content from a network service, a user starts navigating from a main page or top page. For example, this may be the main page of a broadcaster's catch-up TV offer, such as BBC's iPlayer. Then a user needs to select a content category typically followed by a sub-category and even sub-sub-category and so on. For example, to access an episode of a favorite TV series, the user first needs to select the TV series category, within which he needs to select the actual series. Then he may need to select a season and finally choose the actually desired episode. The entire operation required is complicated and does not really match the intuitive operation of CE devices in several points. On the one hand, such a kind of web-like navigation might be inconvenient and time consuming when taking into account the typically limited user interfaces of CE devices, for example a remote control of DTVs. On the other hand, a user experience to be typically expected from CE devices might be to get instant access to desired content, for example selecting a broadcast channel or selecting a program from the EPG.

A promising solution in this context is the provision of automatic content recommendations. Thereby, on the one hand, it is possible to provide a convenient user interface suited for CE devices, for example selecting appropriate content from a simple list of recommended content items. On the other hand, instant access to desired content is enabled.

As described above, typically conventional recommendation mechanisms are bound to a certain domain, for instance to service network or broadcast. However, it is desirable, for example, when watching an episode of a TV series, to have a related content recommended, for instance, a past episode from a catch-up TV service. Therefore, a cross-domain recommendation is required in order to recommend content from network-based services based on information about broadcast content.

It is a drawback of conventional recommendation mechanisms that the recommendation timing is not adapted to cross-domain recommendation. In typical web services, content recommendations are instantly adapted or changed when the user selects a content item. In another typical example, related content is recommended instantly after consumption of a content item is finished. Considering the case of DTV and catch-up TV service, both options might lead to undesired results. For example, in the case of a user who is watching an episode of TV series and has missed one or more previous episodes, he would benefit from a recommendation of these past episodes available via catch-up service. On the other hand, he would not benefit if the content was to be recommended after the current episode only. In the other case when a user has not missed any previous episode, an instant recommendation of past episodes might be annoying to the user. However, a recommendation of available future episodes might be of great interest after the user has consumed the current one.

The present invention aims to provide a content recommendation system and method that are particularly optimized for cross-domain recommendation.

This is achieved by the features of the independent claims.

According to a first aspect of the present invention, a content recommendation system for recommending predetermined content to a user is provided. The content recommendation system comprises a current program information obtaining unit for obtaining information about a program that is currently being watched by the user. The content recommendation system further comprises a judging unit for judging an appropriate time for recommending said predetermined content, based upon the obtained current program information. The system further comprises a recommendation unit for recommending the predetermined content to the user at the time judged by the judging unit.

According to a second aspect of the present invention, an automatic method for recommending a predetermined content to a user is provided. The method comprises the step of obtaining information about a program that is currently being watched by the user. The method further comprises the step of judging an appropriate time for recommending the predetermined content based on the obtained current program information. Further, the method comprises the step of recommending the predetermined content to the user at the judged time.

It is the particular approach of the present invention to provide a consumer watching a certain audio-visual program content with a recommendation of related content, at an optimized timing. A recommendation system according to the present invention therefore judges an optimized instance of time for recommending related content based on at least information about the program currently being watched by the consumer.

Preferably, the system according to the present invention further comprises a viewing history holding unit for holding a viewing history. For instance, a viewing history may comprise information regarding programs that have been watched or otherwise consumed by a user or via a terminal device in the past. Information may be used to optimally select content to be recommended to a particular user. More specifically, the viewing history comprises information about a user having watched particular episodes of a TV series that have been broadcast in the past, but not having watched (having missed) other episodes of the series. Preferably, the viewing history holding unit maintains a single viewing history for a terminal device. Such an option is sufficient if the terminal device is usually used by one and the same user or group of users such as a family.

Alternatively preferably, the viewing history holding unit maintains a viewing history for the individual user. In such a case, additional information about the current user consuming the content items is required. A further option is a mixture of device-based and user-based histories. For example, a common history may be held in case no user is identified, but if a current user is known, an individual history is maintained.

More preferably, the judging unit also takes into account the viewing history for judging an appropriate instance of time. For instance, if the user is currently watching an episode of a series, but has missed a previous episode, the system can decide or recommend the previous series at the beginning of the current episode. Thus, the user can switch over to a download of the current episode instead of watching it from broadcast and at the same time, obtain the past episode from the catch-up service. Consequently, viewing the episodes in the right sequence is enabled, even if the user has missed a particular or several past episodes.

On the other hand, in different situations, it may be advisable to postpone a recommendation until an appropriate point in time, such as an end of a broadcast program, in order not to undesirably interrupt or annoy the consumer. Preferably, the judged appropriate time is therefore during (for instance, at the beginning), or after watching the current program.

Further preferably, the judging unit additionally takes into account information regarding the recommended contents (the predetermined program) itself. For instance, if the program to be recommended is in no sequential temporal relation to the currently viewed broadcast content, it may be generally judged to present the recommendation only after the current program has finished, in order not to interrupt the user.

Preferably, the predetermined content to be recommended is available by a service network, while the currently watched program is watched from broadcast. Accordingly, the system realises that the recommendation of network based content, such as web content, is related to broadcast content (cross-domain recommendation). Preferably, predetermined content to be recommended relates to a catch-up TV service that corresponds to the broadcast program currently being watched. More preferably, the predetermined content to be recommended is available on the service network for download, or for being consumed by streaming.

According to a preferred embodiment, the system according to the present invention further comprises a content availability checking unit for checking the availability of a content on the network. According to the preferred embodiment, only those contents are recommended that are indeed available for the consumer in an easy manner. More preferably, content is recommended only to a user when it is available on the service network, free of charge (FoC). Alternatively, recommendation information presented to the consumer additionally indicates time periods during which the recommended program is available FoC, or (possibly varying) prices for watching the program during certain time periods.

According to a further preferred embodiment, the predetermined content to be recommended is further decided based on both the viewing history and the checked content availability.

Further, preferably, a current program information obtaining unit periodically or occasionally, updates the viewing history based on the obtained information.

According to a further preferred embodiment, the system according to the present invention includes a searching/recommending unit for user generated content that is related to the predetermined recommendation content, and/or the program currently being watched. Thereby, enhanced possibilities of cross-recommendation are achieved.

Also, preferably, recommendation of contents based on a local means (for instance a local hard disk drive (HDD)) are included in the contents to be decided for recommendation by the recommendation unit.

According to a preferred embodiment, the content recommendation system according to the present invention is included in a single terminal device. Preferred examples of terminal devices that may comprise a system according to the present invention, are TV-service (digital TV-sets DTV), as well as digital video recorders DVR or personal video recorders PVR. Such an embodiment provides a compact solution that may be specifically tailored to the requirements of a particular consumer equipment.

Alternatively, the system may be realised in the form of a set top box STB. Further alternatively, components of the content recommendation system according to the present invention are distributed over the terminal device that is established at the consumer's premises, and a particular server (CE server) that serves as a proxy between a network service such as a catch-up service, and the consumer terminal device. On the one hand, the search and recommendation determination processing is simplified if it is server-based. On the other hand, terminal device implementation is simplified thereby.

According to a particular aspect of the present invention, a computer program product including a computer-readable medium having computer-readable program code embodied thereon is provided. The program code is adapted to cause a computer to execute the steps of a method according to a second aspect of the present invention when loaded into the computer.

Further embodiments of the present invention are the subject matter of the dependent claims.

Additional features and advantages of the present invention will become apparent from the following and more particular description as illustrated in the accompanying drawings, wherein:
Fig. 1 illustrates the high-level system architecture of an exemplary embodiment of a system integrating broadcast and service network functions,
Fig. 2 illustrates the high-level system architecture of another embodiment of a system supporting contents supplied via broadcast and service network,
Fig. 3 illustrates an overview over the system components of a content recommendation system according to the present invention,
Fig. 4 is a flowchart illustrating an exemplary procedure for generating a viewing history according to an embodiment of the present invention,
Fig. 5 is a flowchart illustrating an exemplary procedure for triggering generation of content recommendations according to an embodiment of the present invention,
Fig. 6 is a flowchart illustrating a basic procedure for judgement of recommendation time for content recommendation according to an embodiment of the present invention, and
Fig. 7 is a flowchart illustrating a further particular embodiment of operation of the judging unit according to the present invention.

Illustrative embodiments of the present invention will now be described with reference to the drawings.

The present invention provides a content recommendation system that is particularly adapted for providing a cross-domain recommendation architecture, wherein a consumer electronics device such as a TV receiver has access to both broadcast content and content received via a service network. A typical example for such a system architecture is the provision of so-called catch-up TV services, i.e. the availability of program contents that were broadcast via a service network, preferably, a broadband network, for a certain limited time period after broadcast.

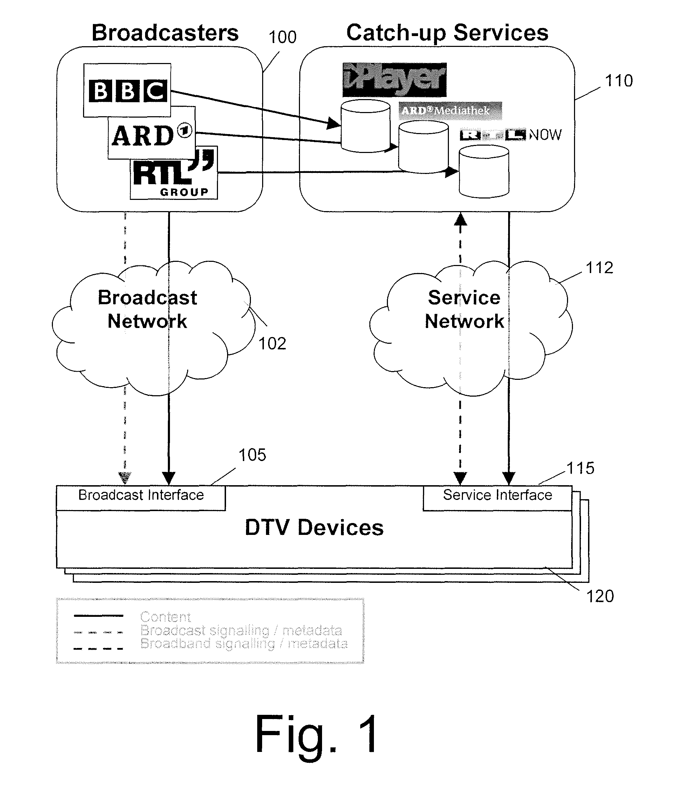

Fig. 1 illustrates an exemplary embodiment of key elements of a service architecture that is used within the framework of catch-up TV service. Broadcasters 100, on the one hand, provide their content via traditional broadcasting means 102 in a linear fashion, for instance, based on satellite or cable or terrestrial technologies. On the other hand, they may, in addition, provide access to their content, or a subset thereof, via catch-up services 110 in a non-linear fashion. Currently, each of the major broadcasters, like BBC or ARD or RTL provides an individual catch-up TV service. However, it is also possible that one or more broadcasters offer a joint catch-up TV service, comprising content from all participating broadcasters. Furthermore, also other, non-broadcast content providers can possibly participate in such a service. A different further possibility is that a catch-up TV service is offered from a content aggregator, who typically does not own any content by himself.

The key element used by the content consumers to receive the content, are the DTV devices 120, for instance, digital television sets. According to widespread embodiments, and as shown in Fig. 1, DTV devices 120 are equipped with a broadcast interface 105 and a service interface (preferably, a broadband interface) 115.

The broadcast interface connects to a broadcast network 102, which usually provides a unidirectional communication (downlink) only. Typical examples of broadcast networks 102 are satellite, cable or terrestrial TV systems that are preferably based on digital TV standards like those provided by the DVB family of standards. On the broadcast interface 105, the DTV devices 120 may receive broadcast related signalling and of course, the broadcasted content.

The service interface 115 connects to a service network 112 (preferably, a broadband network), which typically provides a bi-directional communication (downlink and uplink). According to a typical preferred embodiment, the service network provides IP-based service access. The service network 112 and the service interface 115 can be based on standards for fixed broadband networks, such as, DSL. Alternatively, they may be based on mobile broadband networks, for example, like WiMAX. On the service interface, the DTV devices may send and receive signalling related to broadband services and may receive distributed content.

As already outlined above, in accordance with an alternative embodiment (not shown in Fig.1)n DTV devices may be solely equipped with a service network interface. Connecting to a broadband network via the service interface, on the one hand, the devices may send and receive broadcast content related signalling and the respective content. On the other hand, the devices may send and receive service content related signalling and content. Such an alternative is typically used by telecommunications operators and their IPTV-service offers. The distribution of broadcast content is usually based on multicast mechanism, while the distribution of service content such as catch-up services typically utilizes point-to-point mechanisms like streaming or download.

As illustrated in Fig. 1, typically, the terminal devices such as DTV devices 120 directly receive and process the signalling included in the broadcast streams. From the received information, the terminal devices usually generate (broadcast) Electronic Program Guides (EPG).

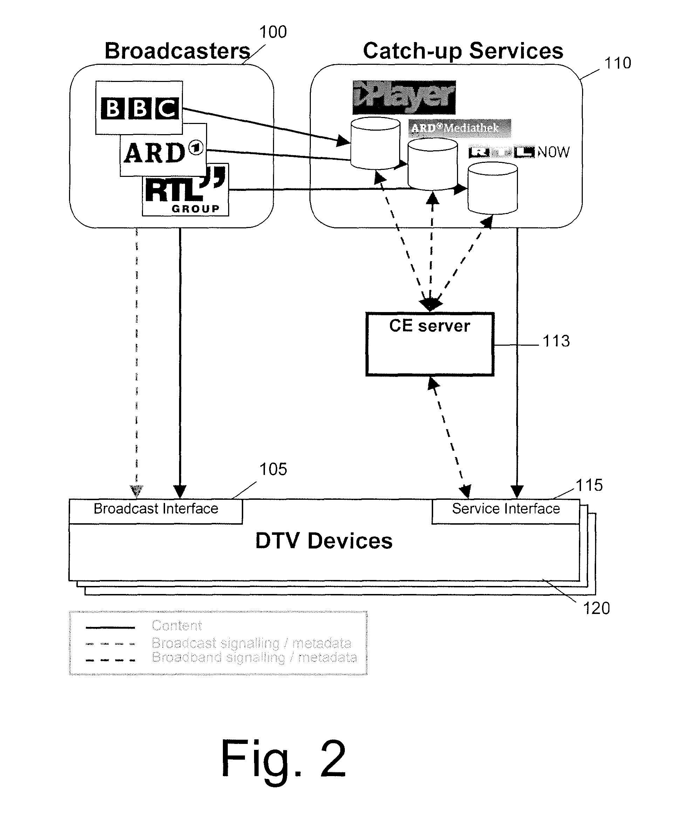

An alternative embodiment, for hybrid broadcast and service network based services as targeted with the present invention, is illustrated in Fig. 2. Fig. 2 shows an exemplary embodiment of an underlying system architecture from a higher level point of view. In addition to the broadcast content providers 100, the respective broadband services 110 and the DTV devices 120, as described in connection with Fig. 1, a new element, the so-called "CE-server" 113 is depicted. One of the main functionalities of the CE server 113 is to collect information about available content from broadband services 110 and to process respective metadata. The information is provided from the CE server to a terminal device, such as a DTV device 120, wherein it is integrated with the broadcast EPG.

Please note that Fig. 2 does not illustrate the infrastructure components of broadcast and service networks, labelled 102 and 112 in Fig. 1, for sake of simplicity.

Allocating some or all of the functions described above to the CE server 113, i.e. an element outside the terminal device 120, has several benefits. On the one hand, broadband service discovery is simplified utilizing a server-based mechanism. For example, the terminal devices may always access a single (i.e. always the same) predefined server URL connecting to the CE server, while newly edited or changed broadband services may be maintained at the CE server 113, for instance, utilizing a simple list of URLs. On the other hand, also terminal device implementation is simplified. For example, information about service content exchanged between the CE server 113 and the terminal devices 120 may be encoded in a single (terminal-friendly) format. In the event that the CE server 113 is capable of retrieving information encoded in different formats from different services, it is capable of changing it to a common format, for instance, utilizing a transcoding function.

The system architecture depicted in Fig. 2 may be called "hybrid", as information about broadcast content is retrieved and processed at the terminal device 120, while information about service content is retrieved and processed at a separate device, such as CE server 113.

It is emphasized that other system architecture options are possible. On the one hand, a terminal-centric architecture (c.f. Fig. 1), by its direct access to the broadband network services, retrieves information about available content and integrates it with broadcast EPG. On the other hand, in a server-centric architecture, an element like the CE server can be responsible for collecting and processing both, service network and broadcast content information and delivers the already integrated EPG to the terminal devices.

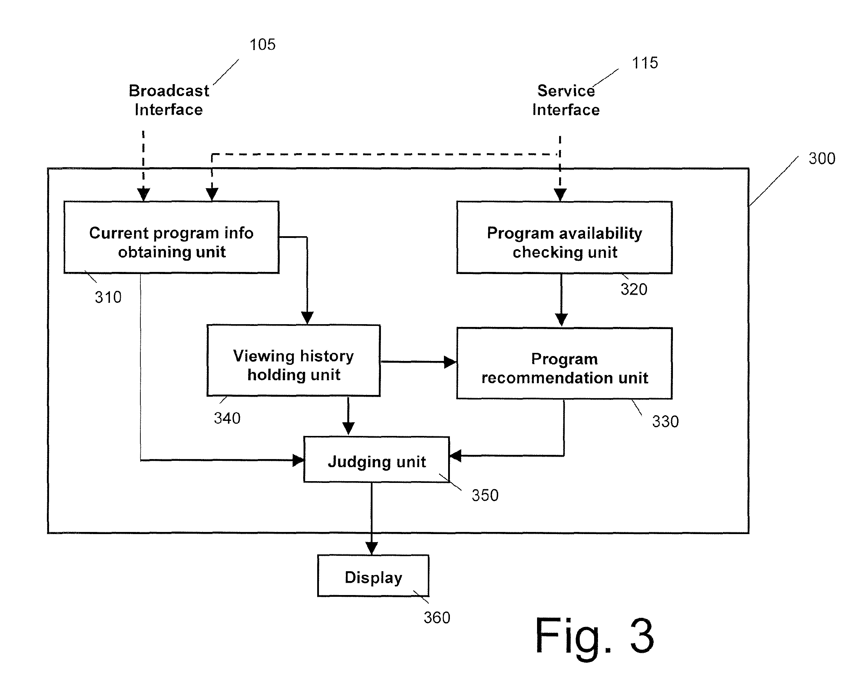

Fig. 3 illustrates an overview over the main functional components of a content recommendation system 300 according to an embodiment of the present invention. It is generally noted that the components may be included in a single terminal device established at the consumer's premises, such as a DTV-device 120, or alternatively, DVD recorder, personal video recorder or set-top box, or another kind of terminal device.

The invention is not limited to the case of including all the illustrated components into a single terminal device, but they may also be distributed over several devices. For instance, some of the illustrated functional units can be included in a centralized component, such as a CE server as described above.

Generally, system 300 is provided with both broadcast interface 105 and a service interface 115. It is however noted that, as indicated above, in accordance with a particular alternative embodiment, no broadcast interface is provided, and broadcast contents are also available via service interface 115.

A first functional unit, connected to both external interfaces, is current program information obtaining unit 310. The main purpose of the current program information obtaining unit (in the following, abbreviated as CPI), is to retrieve information related to currently consumed broadcast content. At a minimum, the collected metadata include the content title. A large variety of additional information might also be comprised. For instance, information identifying a content item may be included. Besides the title, typical examples are a content identifier, like an alpha-numeric code that may uniquely identify the content item. Such an identifier can also be used to address content information inside an EPG application. Further, the information may indicate relationships to other content items. A typical example is a TV series consisting of several episodes. An episode number, defines the consumed contents position in relation to other episodes of the same series. Furthermore, collected metadata may include detailed information about the content like genre, actors, director or some short description. Also, information like content length, current broadcast channel, and/or broadcast schedule may be retrieved.

Optionally, the CPI may retrieve the data from signalling information included in the received broadcast stream. For example, the information can be provided using service information as standardized in DVB (DVB-SI). According to another option, the CPI retrieves the data from the service network via service interface 115. A typical example is that the broadcast content provider, in addition to distributing the content via the broadband network, offers information about the currently broadcasted content from a broadband service, for instance, a web page. Another typical example of a broadband service offering information about broadcast content may be a third party EPG provider. Typically, the information retrieved from these broadband services is encoded using XML (Extended Markup Language), but also other encodings are possible.

According to another optional embodiment, CPI 310 utilizes both broadcast information in combination with service network information, to retrieve information about the current broadcast content. So, partly information is retrieved from signalling information included in the received broadcast stream and partly from network services such as broadband services. The information collected from the different networks may be overlapping and/or complementing each other.

As another part of the information collection function, the CPI 310 may change or adapt the information to a suitable form for other functional components. This might, on the one hand, refer to the encoding of the information, for example, changing information encoded in different formats to a common format. On the other hand, this may refer to generating a subset of collected information. One example of another functional component for the information is EPG applications. In the context of the present invention, the CPI 310 provides the information to a component generating a viewing history, which will be described in more detail below.

A further component directly connected to service interface 115 is program availability checking unit 320. The main purpose of the program availability checking unit 320 (in the following abbreviated as PAC) is to obtain availability information of a content item from the service network (preferably a broadband network). Therefore, PAC 320 is provided with information about the requested content item, for example, a title or other content identifier. Typically, also content source associated with the content item in question, is provided as input to PAC 320. The content source can be identified by a broadband service URL. The URL may be directly provided to the PAC or optionally it may be derived from other information like a broadcast channel identifier.

A particular example of a content to be checked for availability is a TV program that has been previously broadcasted and is possibly available for download or streaming via a catch-up TV service. However, the content availability check is not limited to a catch-up TV service. Generally, the program availability checking unit PAC as described herein may therefore also be called a content availability checking unit.

The PAC (program content availability checking unit) retrieves availability information from the content source based on the content identifier. The availability information preferably comprises an availability status, and if applicable, can further comprise information required to retrieve content from a broadband service, such as a URL. The availability status may provide more detailed information how the content item can be retrieved. For example, if the content item is not yet broadcasted, access to it may be charged. On the contrary, if the content item was already broadcasted, it may be accessed free of charge. Of course, there may be the case where a requested content item is not available from a broadband service. Also, a time period during which content is available on catch-up TV service free of charge, is often limited.

Typically, the availability information retrieved from broadband services is encoded using XML, but other encodings are possible as well. Additionally, a preferred function of the PAC 320 is to change or adapt the obtained information to a suitable form to be used in other functional components.

The main purpose of the viewing history holding unit 340 is to maintain a content viewing history. Information comprised in the viewing history holding unit (in the following, abbreviated to VHH) can be updated based on information provided from CPI 310. Therefore, a direct connection between CPI 310 and VHH 340 is provided.

A VHH analyzes the collected information regarding interrelationships of different content items. A typical example of such a relationship is individual episodes belonging to a television series. Therefore, the VHH is capable of directly using information provided from the CPI, such as title and episode number. Alternatively, the VHH may need to identify related content items by itself, for instance, based on content identifier information provided from the CPI.

Typically, VHH 340 maintains a single viewing history for a terminal device. However, the terminal device may be utilized by different users. A typical example is a single DTV device used by all members of a family. Hence, another option is that VHH 340 maintains a viewing history for the individual user. In such a case, the VHH may additionally require information about the current user consuming the content items. A further option is a mixture of those device-based and user-based histories. For example, there might be common history in case no user is identified, but if a current user is known, an individual history is maintained.

The viewing history data is maintained in the VHH using the storage system like a database. From the viewing history holding unit 340, viewing history information is provided to other functional components. Alternatively, the VHH may provide an interface, for instance, like an API, allowing other components to query viewing history conditions used. For example, it is possible to notify or query on the VHH whether a sequential number of episodes of a television series have been watched or some episodes are missing.

The main purpose of the program recommendation unit 330 is to generate a recommendation of content items from a service network that might be of interest for a user. As one key characteristic, this recommendation may be based on a viewing history of broadcast content items used for detecting the content interest of a user. A typical example is that a user watches episodes of a television series. From viewing history information holding unit 340, program recommendation unit 330 (in the following, abbreviated as PRU) may detect that a user has watched episodes no. 1, 2 and 4. In this example, the PRU may detect a user's interest in this television series. Therefore, it may generate a recommendation for episodes of this series. On top of episodes 1, 2 and 4, the PRU may include episode 3, which the user obviously missed, and episode 5, which might be the most recent one. For obtaining the viewing history information, PRU 330 is connected to VHH 340.

Another key factor or the recommendation generated by the PRU, is the content availability from the service network. Although a content item may be of interest for a user from the viewing history point of view, it may not be included in the content recommendation, as long as it is not available from the broadband network. In the above example case, episodes 3 or 5 may only be recommended if they would be available from the network content service, such as a catch-up TV service. PRU 330 is connected to PAC 320 to obtain the content availability information.

There are several options when a PRU 330 generates a content recommendation. One possibility is that the generation of a recommendation is based on a time interval. Typically, such an option is realised using a timer inside the PRU. Thereby, the recommendation may be regularly updated. According to another option, the generation of the recommendation may be triggered by an event outside the PRU. User interaction can be one possible event. For example, the user selects content recommendation from the user interface, by for instance, pressing a function key on the remote control or opening the EPG. Other event options can be updates of the viewing history or change availability of content items from the service network. Accordingly, generation of program recommendation can be triggered by VHH 340 or PAC 320.

An essential component of a system architecture according to the present invention is judging unit 350. The main purpose of the judging unit (in the following, abbreviated as JU) is to provide optimized content recommendations that are matching the user's requirements. Therefore, JU 350 adapts a recommendation of broadband content items generated by the PRU, taking into account information relating to currently consumed broadcast content. The JU obtains this information from the CPI. Additionally, the JU 350 may further take into account information regarding the viewing history held in VHH 340, and information about the program/content to be recommended from PRU 330.

One aspect of the targeted optimization is to decide optimized timing when to provide a recommendation of possibly interesting broadband content items to the user. Simply providing a content recommendation all the time, when some state (for instance, viewing history or content availability) has changed, might be annoying to the user. Depending on the currently consumed broadcast content, and the generated service network content recommendation, sometimes it might be beneficial to instantly provide a recommendation to the user, whereas sometimes it might be beneficial to postpone this after consumption of the current broadcast content has been finished.

Another aspect of the targeted optimization may be to optimize the list of content items included in the presented recommendation. Simply including all related items (for instance, all available episodes of a television series) might be annoying to the user. Depending on the currently consumed broadcast content and the optimized timing for providing the recommendation to the user, it might be beneficial to limit the included broadband content items to a small number of closely related ones.

A typical example is as follows: assume that a user is watching a television series. In the past, he or she might have watched episodes 1 and 2, which may lead the PRU 330, to generate a recommendation including episodes 1, 2 and 3 (assuming all are available from a broadband content service). In the event the user is currently watching episode 4 from broadcast, it may be beneficial to instantly recommend episode 3, which the user obviously missed. The user may decide to watch this episode first, in order to catch up with the story line. In another example case, the user is currently watching episode 3. Here, it might be annoying to the user to get recommendations for episode 2. However, it might be beneficial to recommend episode 4, right after watching of episode 3 has finished.

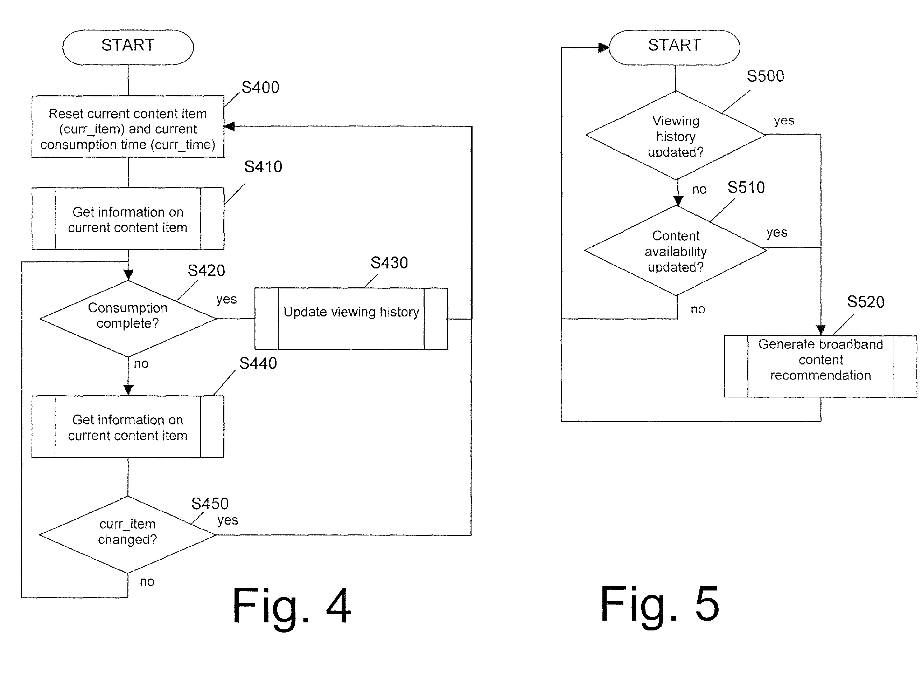

In the following, exemplary operation schemes of the system described with reference to Fig. 3 will be explained with reference to the flow charts of Figs. 4 to 7. It is noted that the following operation schemes are given by way of example only. The invention, or the embodiments thereof are not limited to the examples described.

Fig. 4 exemplifies a procedure for generating a viewing history. The procedure may involve the functional components current program information obtaining unit 310 and viewing history holding unit 340.

The viewing history can be updated each time a content item has been completely consumed. Two variables can be used to detect this condition. One variable is used to store information regarding the currently consumed content item (curr_item). Another variable is used to store information about the time the current content item has been consumed (curr_time).

In initial step S400, the variables are reset or cleared. In next step S410, information about the currently consumed content is obtained, for instance, utilizing the functional component CPI 310. The information is stored in the variable curr_item. Typically such a variable does not store the entire information set, but rather comprises a reference or a pointer to such a data structure.

In next step S420, it is checked whether the current content item has been completely consumed. This is achieved by comparing the curr_time variable with content length, which is, for instance, retrieved as part of the content information, for instance utilizing the CPI 310. If it is detected that the complete content item has been consumed (S420: yes), the viewing history is updated at step S430 with the information about the content item, for instance, utilizing the functional component VHH 340. Typically, consumption of a content item might be considered complete when the time consuming the item is equal to the entire length of the content. Alternatively, completeness can be considered to have been achieved when consumption reaches a time threshold or when the user manually marks the content as "seen". The threshold value may be an absolute value or relative to the content length.

In the case that it is detected that consumption of the content item is not yet complete (S420: no), the procedure enters a loop until either consumption is completed or the current content item is changed before completion (S440, S450). In the latter case, the procedure may continue with checking the new content item for potential inclusion into the viewing history (S450: yes→ S400).

Fig. 5 exemplifies a procedure for triggering generation of broadband content recommendations. The procedure may involve the functional components viewing history holding unit 340, program availability checking unit 320 and program recommendation unit 330.

Recommendation for content may be generated (S520) or updated each time the viewing history information or content availability information is changed. A typical example regarding updated viewing history (S500) is that a new content item is added, since the user has finished consuming respective broadcast content. A typical example regarding updated content availability (S510) may be that a content item becomes available from a network service such as a broadband service which was not available before. In this way, the generated content recommendation may always remain up-to-date regarding current viewing history and content availability conditions in the service network.

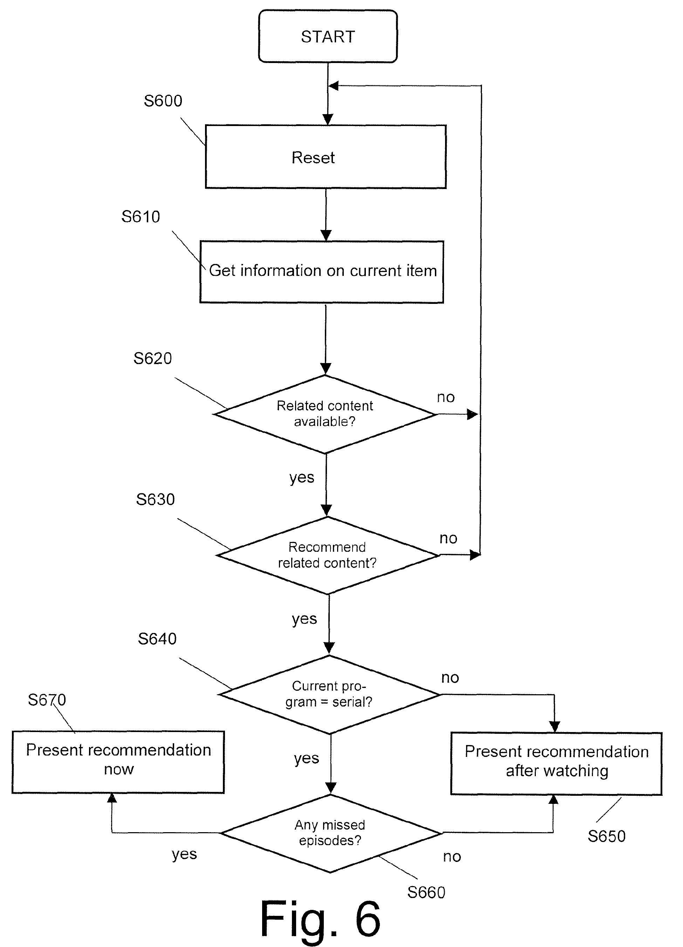

Fig. 6 illustrates an example of judging an appropriate time for presenting a recommendation to a user according to the present invention. In an initial step S600, the system initializes and variables are reset as described above in connection with step S400 illustrated in Fig. 4. In subsequent step S610, information about an item currently being watched is obtained, as described in connection with the description of the program information obtaining unit 310. The following step S620 checks whether any related content is available on the service network, such as for instance via a catch-up TV service.

If any related content is available, in subsequent step S630 it is determined whether the related content is suitable for being recommended to a user. If it is determined that the content is suitable, it is decided to recommend the related content, and in the subsequent steps it will be judged when is an appropriate time for recommending the related content to the user. In an exemplary embodiment, it is further determined whether the current program is a part of a serial in step S640. In the case that the program currently being watched does not belong to a serial (S640: no), it is concluded that most likely the related content and the contents currently being watched may be consumed in either sequence. Consequently, in order not to annoy the user during watching the current program, it is judged to present the recommendation only after watching (S650).

If alternatively it is determined that the current program belongs to a serial (S640: yes), it is further determined, based on the viewing history held in the viewing history holding unit 340, whether the user has missed any episodes that are included in the recommended content (S660). If the user has missed any previous episodes, (S660: yes), it is judged to present a recommendation of the missed episode immediately (S670). In the contrary case (S660: no), the recommendation is presented after watching (S650).

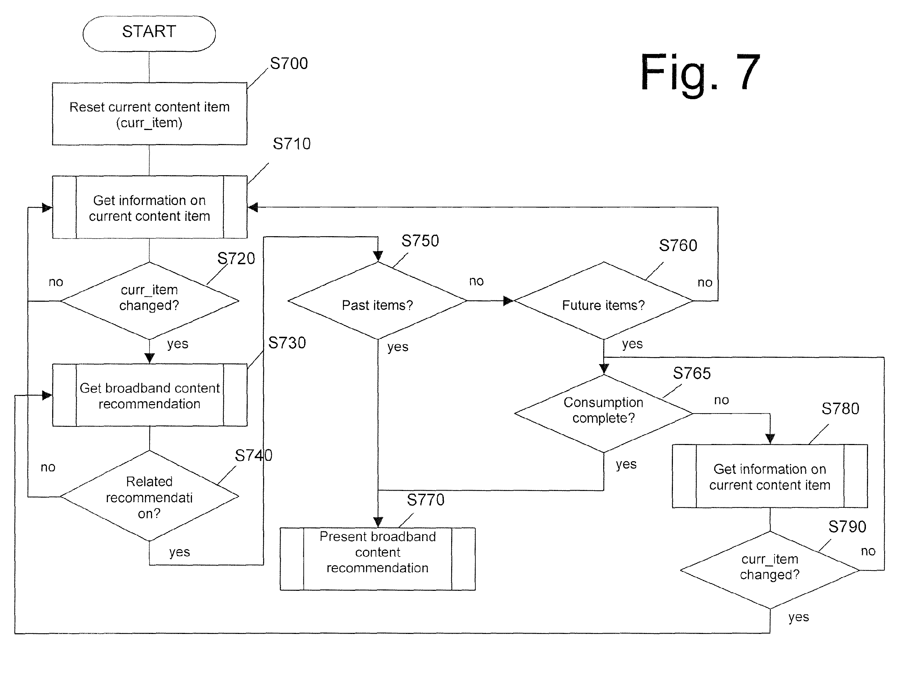

A more detailed example operation of the judging unit 350 is given in Fig. 7. Besides the judging unit, the illustrated procedure may also involve the current program information obtaining unit 310 and program recommendation unit 330.

The recommendation of content items is optimized based on currently consumed broadcast content item information.

In initial step S700, the variable storing information regarding the currently consumed content item (curr_item) is reset or cleared. In next step S710, information about the currently consumed content item is obtained, for instance, utilizing the functional component CPI 310. The information is stored in the curr_item variable. Typically, such a variable does not store the entire information set, but rather comprises a reference or pointer to the respective data structure.

In subsequent step S730, the broadband content recommendation is obtained, for instance, utilizing the component PRU 330. If there is a recommendation, the next step (S740) checks whether the recommendation or a subset thereof is related to the currently consumed broadcast content item. This may be achieved by comparing information available from the curr_item variable with information contained in the content recommendation obtained. A typical example is to compare the title of a currently consumed broadcast content item with the titles of content items contained in the recommendation, preferably items available via the service network connection. Of course there are several other options for detecting a relationship, such as utilizing content identifier information, channel identifier information or even combinations of different kinds of information.

In the case that no match is found, it may be concluded that there is no recommendation related to the currently consumed broadcast item (S740: no). In this case, the procedure may enter a loop until the consumed broadcast content item is changed (S720: yes) and a related content recommendation is available (S740: yes).

In the case that a match is found (S740: yes), it is concluded that the recommendation is related. In a subsequent step, depending on the content of the recommendation in the currently consumed broadcast content item, an appropriate time for presenting the recommendation to the user is decided.

One option might be that the recommendation contains service content items that are chronologically related to the past compared to the currently consumed broadcast content item. A typical example, already referred to above, is that the user is watching an episode of a television series and the recommendation contains a previously missed episode. In this option (S750: yes), the procedure proceeds with instantly presenting content available on the service network ("broadband content") as a recommendation to the user.

According to another option, the recommendation contains service network content items that are chronologically related to the future compared to the currently consumed broadcast content item. A typical example is that the user is watching an episode of a television series, while the recommendation contains a future episode that may be available from the service network (S760: yes). In this case, presentation of the recommendation to the user may be deferred until consumption of the current broadcast content item is complete. Therefore, the procedure may enter a loop (S765: no→ S780 → S790: no), until the condition is met. In the case that the broadcast content item is changed before consumption is completed (S790: yes), the procedure continues with checking for related broadcast content recommendation, as outlined above.

A further option may be that the recommendation contains a content item that is chronologically related to the currently consumed broadcast content item in a manner that renders recommendation to be unadvisable (for instance: if the recommendation contains the same content item that is currently being watched). In this case, no recommendation is presented to the user and the procedure continues with checking for a change in the consumed broadcast content item and a related recommendation, as illustrated by the arrow from step S760 (no) to step S710.

In case the procedure continues to present a recommendation to the user, the contained items may be adapted based on the decided timing. The adaptation may limit the recommended content items to relevant ones only as compared to the currently consumed content item. In case it is decided to instantly present the recommendation because it contains content items that are chronologically related to the parts of the broadcast content item currently being consumed, only these might be presented to the user. On the other hand, if it is decided to present the recommendation after the consumption of the broadcast content item is completed, only content items chronologically related to the future of the broadcast content item may be included in the presented recommendation.

However, the processing of the judging unit 350 for determining an appropriate timing is not limited to the exemplary cases detailed above. More complicated as well as simplified procedures are possible. For instance, a simplification of the flowchart of Fig. 6 is possible, wherein recommendation related to a serial program is always presented immediately (direct transition from S640 (yes) to S670). Also, the instances of time judged to be appropriate are not limited to "now" and "after current program" but may be any other appropriate time related to the current program and/or the recommendation content.

In the following, some further optional features of embodiments of a system according to the present invention are briefly described.

As mentioned above, as an exemplary class of network service based content related to broadcast content, catch-up TV services have been described. However, there are also various other classes of related content.

A class of content delivered by network services is so-called user generated content (UGC) service. Typical examples are YouTube or DailyMotion. These broadband services are characterized by containing content items corresponding to a broad range of sources. As the name implies, individual users may typically be the source of the content.

However, content related to broadcast content items may also be available from these broadband services. Typical examples are broadcasters that upload current programs contents to UGC services. But also individual users may generate content items related to broadcast content, for example parodies of popular TV shows. Another example may be broadcasters that set up their own UGC services to let users upload content snippets of broadcast programs for which they own the copyright. In contrast to catch-up TV services, the correlation to broadcast content might not be so obvious in the case of UGC services. For example, from the currently consumed broadcast content item it may be more difficult to determine which broadband service may contain related content. This may be the case as there might be no existing correlation between the broadcast channel and the UGC service, as is the case for catch-up TV services. Further, it might be more difficult to determine which content item of a broadband service relates to the currently consumed broadcast content item. For example, the broadband services might use completely different naming conventions compared to the broadcast services. Another reason is that users might typically not bother to supply metadata to the files they upload, but simply give them a name.

Therefore a UGC searching/recommending unit to be added to the exemplary system architecture shown in Fig. 3. The main purpose of the UGC searching/recommending unit (abbreviated as USR in the following) is to search related user generated content from one or more broadband services. Therefore, the USR may be provided with information about the requested content item, for instance, from the CPI component 310. Optionally, this information may be adapted and/or enhanced by the user. For example, the system may present the user with a set of available tags for the broadcast content (for instance, those extracted from DVB SI) from which the users might choose, for example, by means of tick boxes.

The information may comprise, for example, a title or another content identifier. With this information the USR may query different broadband services for content items. The results of the individual queries may be combined in a single list.

Different broadband content services may use different APIs and/or different formats for encoding the information about the available content, for instance, XML (Extended Markup Language) or HTML (Hypertext Markup Language).

Therefore, another function of the USR may be to process different formats and to change or adapt the information obtained to a suitable form to be used in other functional components.

The list of recommended broadband content items generated by the USR may be comprised in the recommendation processed by the judging unit 350. Unlike content items from broadcast-related broadband services, such as catch-up TV services, content items collected by the USR may have no chronological relationship to the currently consumed broadcast item. Therefore, such items may be included in the content recommendation presented after the broadcast content has been completely consumed.

Another example of content available for recommendation includes programs recorded in a terminal device at the consumer's premises. Depending on the capabilities of the terminal device used for consuming broadcast and/or network based content items, thus another source of content might be the device itself. In particular, the case for devices containing storage capabilities. For example, the terminal device may include a hard disc drive (HDD) or other storage media such as an SD card. Typical examples of such devices are personal video recorders (PVR). But also some DTV devices comprise a SD card slot.

Accessing a content item from a broadband service may incur costs. For example, access to the content item may be charged. Another example is that independent of charged or free content access, the user may have to pay for broadband transmission. In such a case, it would be beneficial for the user to access a content item from a local storage, which is typically free of access or transmission charges.

Therefore the functional components PAC 320, PRU 330 and JU 350 may be extended to search and recommend content items also from local storage means such as HDD or SD card (not shown in the drawings). This may replace, overlap or complement the recommendation of content items from broadband services.

The present invention as defined by the appended claims is not limited to those particular embodiments that have been described above. A person skilled in the art is aware of plural further modifications of the described embodiments.

In summary, the present invention relates to a content recommendation system and method that is optimized for cross-domain recommendation by enabling the issuing of a recommendation for related content at a particular appropriate timing. The system according to the invention enables to take into account current broadcast content, past and future programs available from a service network such as a catch-up service and the user's viewing history. For example, it is judged whether available content should be recommended during or after watching the current broadcast content.

## Claims

1. A content recommendation system for recommending predetermined content to a user, comprising:
a current program information obtaining unit (310) for obtaining information about a program that is currently watched by the user,
a judging unit (350) for judging an appropriate time for recommending said predetermined content, based on the obtained current program information, and
a recommendation unit (330) for recommending the predetermined content to the user at the time judged by the judging unit (350).

2. A content recommendation system according to claim 1, further comprising a viewing history holding unit (340) for holding a viewing history, wherein
said judging unit (350) further taking into account said viewing history for judging said appropriate time.

3. A content recommendation system according to claim 1 or 2, wherein said predetermined content to be recommended being available on a network (110, 112), and
said currently watched program being watched from broadcast (100, 102, 105).

4. A content recommendation system according to claim 3, further comprising a content availability checking unit (320) for checking the availability of a content on the network (110, 112).

5. A content recommendation system according to claim 4, further comprising a viewing history holding unit (340) for holding a viewing history, wherein
said recommendation unit (330) further deciding a predetermined content to be recommended based on said viewing history held in said viewing history holding unit (340) and the content availability checked by said content availability checking unit (320).

6. A content recommendation system according to claim 2 or 5, wherein said current program information obtaining unit (310) further updating said viewing history based on said obtained information.

7. A content recommendation system according to any of claims 1 to 6 that is included in a terminal device (120).

8. An automatic method for recommending a predetermined content to a user, comprising the steps of:
obtaining (S410, S440, S610, S710, S780) information about a program that is currently watched by the user,
judging (S640, S660, S750, S760, S765) an appropriate time for recommending said predetermined content, based on the obtained current program information, and
recommending (S650, S670, S770) the predetermined content to the user at the judged time.

9. A method according to claim 8, further comprising the step of holding a viewing history, wherein
said judging step (S660, S750) further taking into account said viewing history for judging said appropriate time.

10. A method according to claim 8 or 9, wherein said predetermined content to be recommended being available on a network (110, 112), and
said currently watched program being watched from broadcast (100, 102, 105).

11. A method according to claim 10, further comprising the step of checking (S620) the availability of a content on the network (110, 112).

12. A method according to claim 11, further comprising the steps of holding a viewing history, and
deciding (S520) a predetermined content to be recommended based on said held viewing history and the checked content availability.

13. A method according to claim 8 or 12, further comprising the step of updating (S430) said viewing history based on said obtained information about the currently watched program.

14. A method according to any of claims 8 to 13, further comprising the step of searching user generated content that is available on the network (110, 112) and that is related to said predetermined content and/or said currently watched program.

15. A computer program product including a computer readable medium having computer readable program code embodied thereon, the program code causing a computer (120) to execute the steps of a method according to any of claims 8 to 14 when loaded into the computer (120).
